# DEMANDE DE BREVET EUROPEEN

(11) **EP 1 402 992 A1**
(43) Date de publication de la demande: **31.03.2004**
(21) Numéro de dépôt: 02079069.7
(22) Date de dépôt: 27.09.2002
(51) Int. Cl.: B23Q 1/36, F16C 11/12

(54) **Appareils de haute précision pour imposer ou mesurer une position ou une force**

(71) Demandeur: Sysmelec SA, 2076 Gals (CH); Mecartex SA, 6616 Losone (CH)
(72) Inventeur: Helmer, Patrick, 1026 Denges (CH); Mabillard, Yann, 1966 Ayent (CH); Clavel, Reymond, 1041 Oulens/Echallens (CH); Bottinelli, Stefano, 6877 Coldrerio (CH)
(74) Mandataire: Laurent, Jean

(57) **Abrégé**

Il est décrit des appareils de haute précision pouvant être agencés et utilisés sous la forme de manipulateurs, d'actionneurs, de capteurs de position ou de capteurs de force, ayant de quatre à six degrés de liberté. Une plate-forme mobile (2), à laquelle est fixé l'objet (3) devant subir des mouvements ou des forces, est reliée à une base (1 ) de l'appareil par six liaisons en parallèle. Ces liaisons comprennent des unités cinématiques articulées (11-16) comportant chacune un parallélogramme déformable et un dispositif de transmission articulé reliant le parallélogramme à la plate-forme (2). Le parallélogramme est associé à un capteur de position et à un transducteur électromagnétique tel qu'un moteur linaire.

## Description

La présente invention concerne des appareils pour imposer ou mesurer une position ou une force avec au moins quatre degrés de liberté, comportant une base fixe, une plate-forme mobile, des liaisons articulées reliant en parallèle la plate-forme mobile à la base, et des moyens de mesure, lesdites liaisons articulées comprenant au moins quatre unités cinématiques articulées dont chacune est montée sur la base et raccordée à un point de connexion de la plate-forme pour accompagner un mouvement de translation de ce point dans une direction sensiblement parallèle à l'un des axes principaux (X, Y, Z) d'un repère de l'espace, au moins une paire desdites unités cinématiques étant raccordée à deux desdits points de connexion distants l'un de l'autre et agencée pour les accompagner en translation dans la même direction et accompagner ainsi une rotation de la plate-forme lorsque les amplitudes de translation de ces deux points sont inégales.

Les termes "imposer ou mesurer une position ou une force" signifient que l'invention est applicable à quatre types d'appareils selon les combinaisons possibles de ces termes, à savoir :
a) un manipulateur lorsque la fonction consiste à imposer une position par déplacement de la plate-forme;
b) un actionneur lorsque la fonction consiste à imposer une ou plusieurs forces à la plate-forme, avec ou sans déplacement de celle-ci;
c) un capteur de position, autrement dit un palpeur, lorsque la fonction consiste à mesurer la position de la plate-forme; et
d) un capteur de force lorsque la fonction consiste à mesurer une ou plusieurs forces agissant sur la plate-forme.

Bien entendu, certaines de ces fonctions peuvent être combinées dans un même appareil.

Un tel appareil est utilisable par exemple pour manipuler des objets avec une grande précision et avec un nombre de degrés de liberté allant jusqu'à six, si chacune des unités cinématiques articulées est équipée d'un actionneur linéaire et d'un capteur de déplacement pour permettre de régler l'amplitude de sa translation avec la précision voulue. On peut notamment réaliser ainsi un manipulateur parallèle à six degrés de liberté appartenant à la catégorie connue sous le nom de "plate-forme de Stewart". Chaque paire d'unités cinématiques articulées orientées suivant le même axe accompagne une translation de la plate-forme mobile et de l'objet fixé à celle-ci quand les deux unités effectuent des translations de même amplitude, et une rotation de la plate-forme quand ces unités effectuent des translations inégales.

Dans les cas où un tel appareil est utilisé de manière passive pour mesurer des positions et des mouvements imposés à un objet fixé sur la plate-forme mobile, il n'est pas nécessaire d'incorporer des actionneurs dans les unités cinématiques articulées, dans la mesure où il suffit de mesurer les translations créées par les mouvements de la plate-forme dans chacune de ces unités, le nombre des grandeurs mesurées simultanément étant égal au nombre des degrés de liberté de la plate-forme.

Les manipulateurs du type parallèle se caractérisent par plusieurs liaisons cinématiques disposées en parallèle pour relier la base fixe à la plate-forme mobile. Cependant, dans certains de ces appareils, une ou plusieurs des liaisons cinématiques peuvent être formées de deux dispositifs articulés couplés en série afin d'assurer deux degrés de liberté à cette liaison. Un tel appareil est décrit notamment dans la demande de brevet EP 1 113 191 qui est incorporée ici par référence et dans laquelle sont décrites certaines caractéristiques constructives de parallélogrammes à articulations élastiques qui sont utilisables avec la présente invention. Le dispositif de transmission de mouvement décrit dans cette demande est utilisable dans un appareil de positionnement ou de mesure et peut fournir jusqu'à trois degrés de liberté en translation de la plate-forme grâce à trois unités cinématiques parallèles comportant chacune deux parallélogrammes en série. De telles liaisons cinématiques présentent les inconvénients propres aux agencements en série, en particulier le fait que le premier parallélogramme articulé à partir de la base doit supporter et déplacer toute la masse du second et que l'amplitude du mouvement permis par une telle liaison en série est nécessairement restreinte.

Au contraire, un appareil selon l'invention est d'un type entièrement parallèle, de sorte que l'entraînement ou la mesure de position ou de force dans chaque liaison articulée entre la base et la plate-forme s'effectue avec un seul degré de liberté.

La demande de brevet EP 0 937 961 décrit un tel appareil de positionnement à six degrés de liberté du type entièrement parallèle. La plate-forme mobile est connectée à trois paires de bras articulés, chaque paire de bras étant parallèle à l'un des trois axes perpendiculaires d'un repère orthogonal cartésien. Les deux bras de chaque paire sont fixés d'autre part à une plaque montée sur une articulation à rotule et associée à deux vis micrométriques permettant de faire pivoter cette plaque suivant deux axes de rotation mutuellement perpendiculaires, pour imposer à la plate-forme une translation et/ou une rotation. Chaque bras comporte deux articulations formées par un fil longitudinal et permettant ainsi une flexion suivant deux axes, et même une torsion le cas échéant.

Cette construction connue a toutefois pour inconvénient des articulations très délicates, n'autorisant que de très faibles charges sur la plate-forme mobile. Pour présenter une bonne rigidité en compression, le fil de l'articulation devrait avoir une section transversale assez grande, mais pour permettre un angle suffisant, il devrait être relativement long, ce qui augmente le risque de flambage. Par conséquent, les articulations de ce type ont en pratique une course angulaire réduite. Un autre inconvénient réside dans la complexité des mesures, puisque les deux micromètres agissant sur chaque plaque intermédiaire ont une interaction mutuelle.

La présente invention a pour but de créer un appareil de positionnement ou de mesure à quatre, cinq ou six degrés de liberté ayant une construction simple et robuste, permettant une grande amplitude de mouvement de la plate-forme mobile et une très grande précision de détermination ou de mesure des positions, déplacements ou forces suivant chaque degré de liberté.

Un but additionnel consiste à doter l'appareil d'un bâti particulièrement rigide tout en étant assez simple à fabriquer.

Un autre but additionnel vise à agencer l'appareil sous forme d'une combinaison de modules semblables, en vue de simplifier sa fabrication et son entretien et réduire les coûts correspondants.

Encore un autre but additionnel consiste à agencer l'appareil de façon que l'objet monté sur la plate-forme soit aisément accessible à la périphérie de l'appareil, notamment pour pouvoir être positionné par rapport à un autre objet extérieur à l'appareil.

A cet effet, l'invention concerne un appareil du genre énoncé en préambule, caractérisé en ce que chacune des unités cinématiques articulées comporte un parallélogramme déformable élastiquement dans son propre plan, un dispositif de transmission articulé reliant le parallélogramme à la plate-forme, et un capteur de déplacement linéaire fournissant un signal de sortie aux moyens de mesure, le parallélogramme comprenant un élément de support lié à la base, un élément de translation lié au dispositif de transmission et deux bras parallèles liés à l'élément de translation et à l'élément de support par des articulations sans jeu, notamment des articulations élastiques.

Ainsi, chaque unité cinématique comporte un mécanisme articulé sans jeu dont le parallélogramme peut avoir une course pratiquement égale à celle de la plate-forme dans la direction de translation concernée et être directement associé au capteur de déplacement, ce qui assure une très grande précision de commande ou de mesure des positions et déplacements, ainsi qu'une dynamique élevée lorsque cette unité est pourvue d'un actionneur ou d'un dispositif de mesure de force. En particulier, le mécanisme permet une grande vitesse de déplacement de la plate-forme et ne présente pas d'hystérèse mécanique.

En outre, le mécanisme articulé peut être configuré entièrement sous une forme plane, donc peu encombrante et relativement facile à fabriquer. La configuration en parallélogramme permet de disposer celui-ci autour de certains éléments tels qu'un transducteur électromagnétique et/ou le capteur de déplacement, si bien que le parallélogramme peut avoir une taille assez grande pour permettre une course linéaire élevée avec des courses angulaires limitées des articulations. Ceci réduit aussi les déplacements de second ordre, perpendiculaires à la direction de translation, qui sont causés par les variations de la hauteur du parallélogramme.

Grâce à l'utilisation d'articulations élastiques, le mécanisme articulé est non seulement sans jeu mais aussi sans frottement et sans usure. Il n'a donc pas besoin de lubrification et n'est pas sensible à la présence de poussière, de liquides ou d'autres salissures, ce qui autorise son utilisation dans un environnement sale. inversement, comme le mécanisme n'émet pas de particules ou d'autres éléments contaminants, on peut l'utiliser avantageusement dans une salle blanche ou un environnement similaire.

D'autres caractéristiques et avantages de la présente invention apparaîtront mieux dans la description qui suit de divers modes de réalisation de l'invention, présentés à titre d'exemples non limitatifs en référence aux dessins annexés, dans lesquels :
- la figure 1 est une vue frontale en perspective montrant les principaux éléments d'un premier mode de réalisation préféré de l'invention, sous la forme d'un appareil de positionnement constituant un manipulateur de haute précision à six degrés de liberté, dont on a enlevé les parois extérieures de protection afin de laisser voir sa structure interne;
- la figure 2 est une vue en perspective de l'arrière de l'appareil de la figure 1;
- la figure 3 est une vue en élévation frontale suivant la flèche III de la figure 1;
- la figure 4 est une vue de dessus de l'appareil de la figure 1;
- la figure 5 est une vue en élévation latérale suivant la flèche V de la figure 1;
- les figures 6 à 8 sont des vues analogues aux figures 1 à 3, où l'on a supprimé les actionneurs électromagnétiques pour mieux laisser voir les autres éléments de l'appareil;
- la figure 9 est un schéma d'une structure articulée plane formant un module constructif de l'appareil représenté aux figures 1 à 8;
- les figures 10 à 15 représentent différents types d'articulations élastiques utilisables dans un appareil selon l'invention,
- la figure 16 représente en perspective un bras de transmission utilisable dans un appareil selon l'invention,
- la figure 17 est une vue en coupe schématique montrant un autre type d'articulation utilisable dans un appareil selon l'invention,
- la figure 18 est une vue en coupe schématique montrant un mode de fixation qui évite des dommages en cas de surcharge mécanique dans l'appareil,
- la figure 19 est une vue frontale en perspective montant les principaux éléments d'un deuxième mode de réalisation de l'invention, sous la forme d'un manipulateur de haute précision à quatre degrés de liberté;
- la figure 20 représente l'appareil de la figure 19, vu dans le sens opposé; et
- la figure 21 est une vue frontale en perspective montant les principaux éléments d'un troisième mode de réalisation de l'invention, sous la forme d'un manipulateur de haute précision à quatre degrés de liberté.

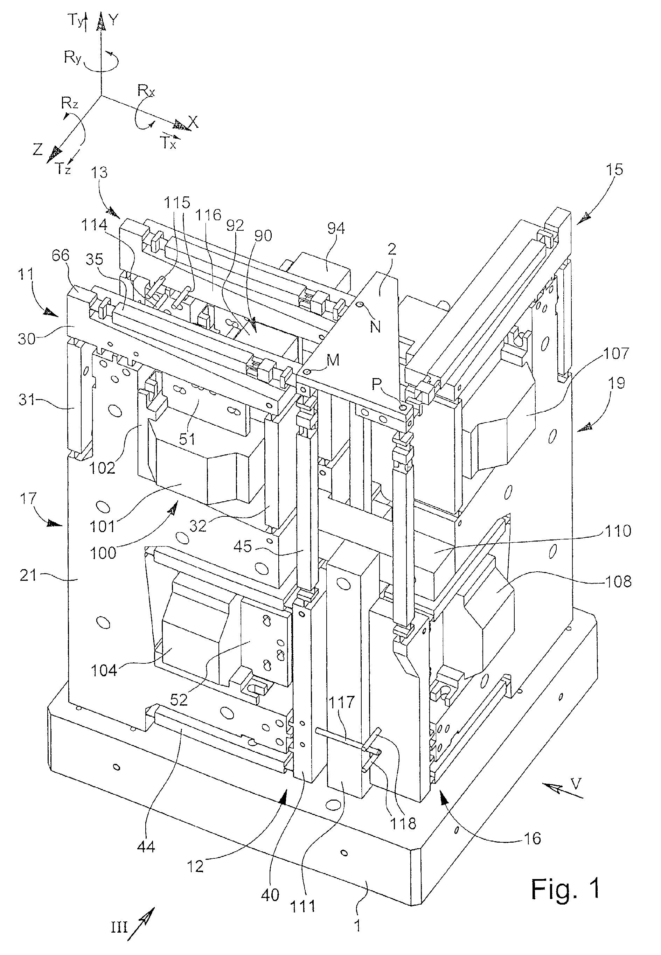

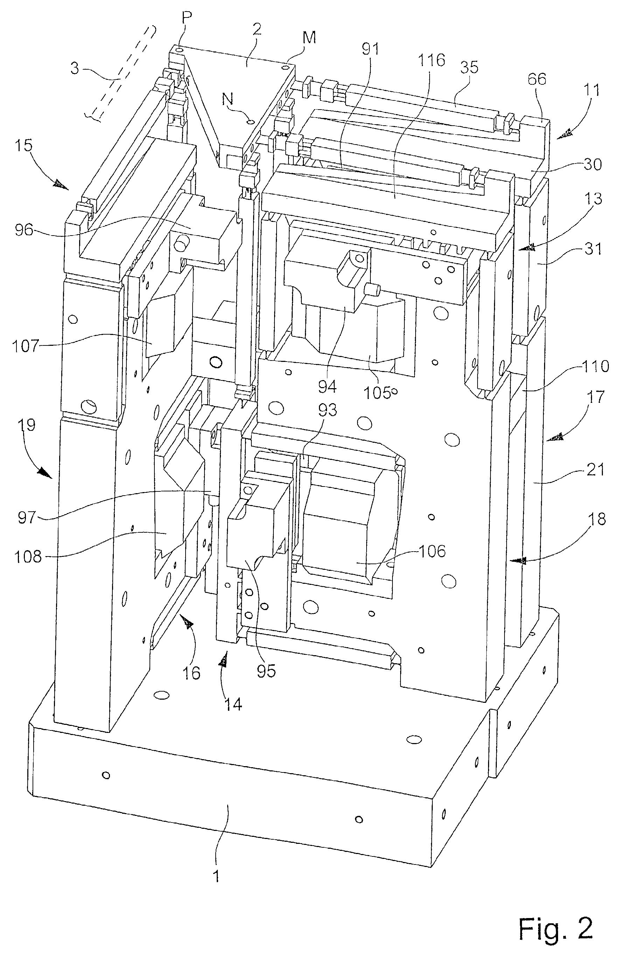

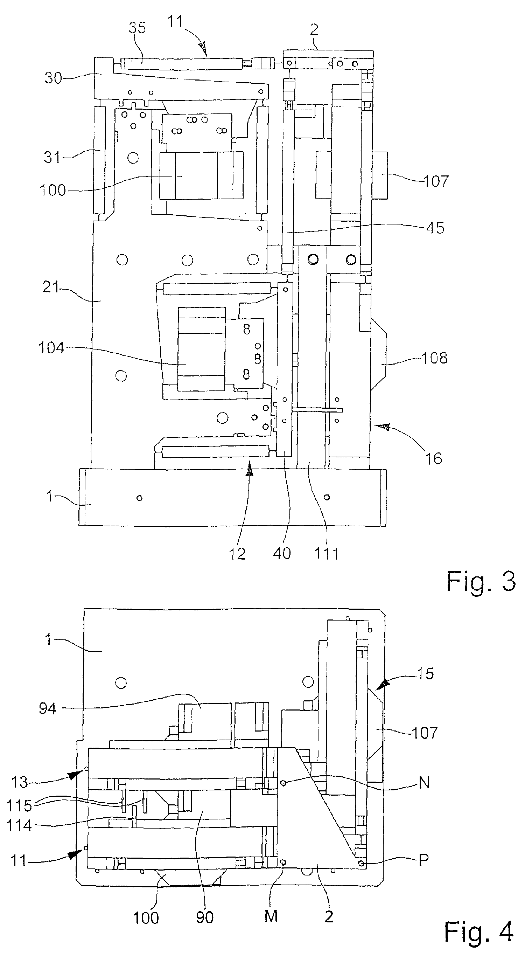

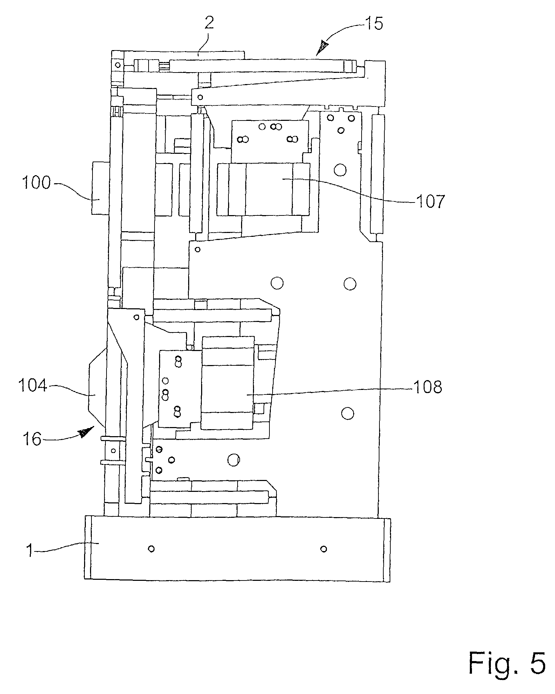

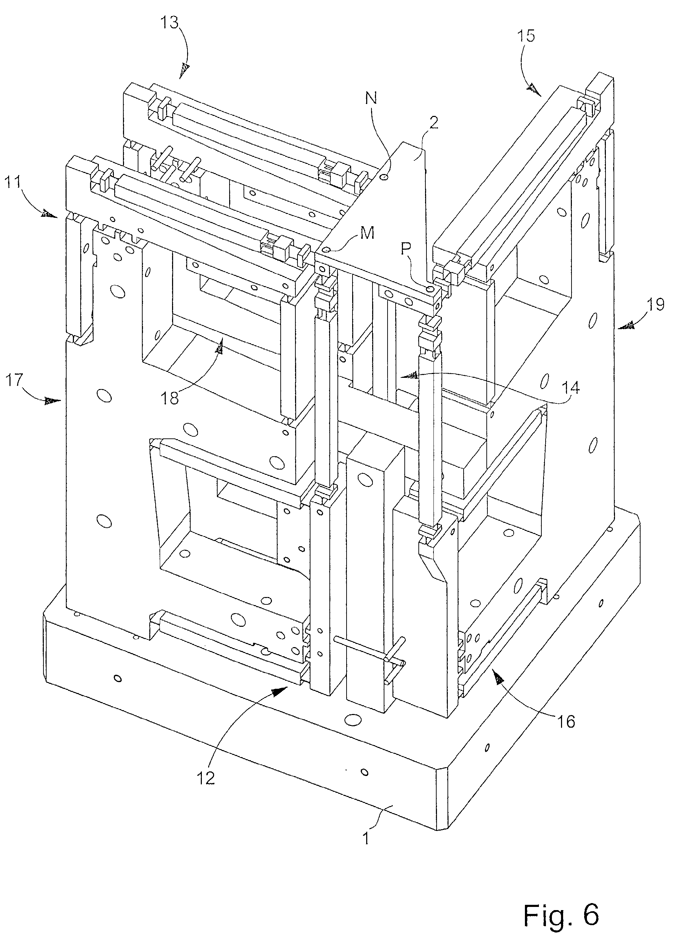

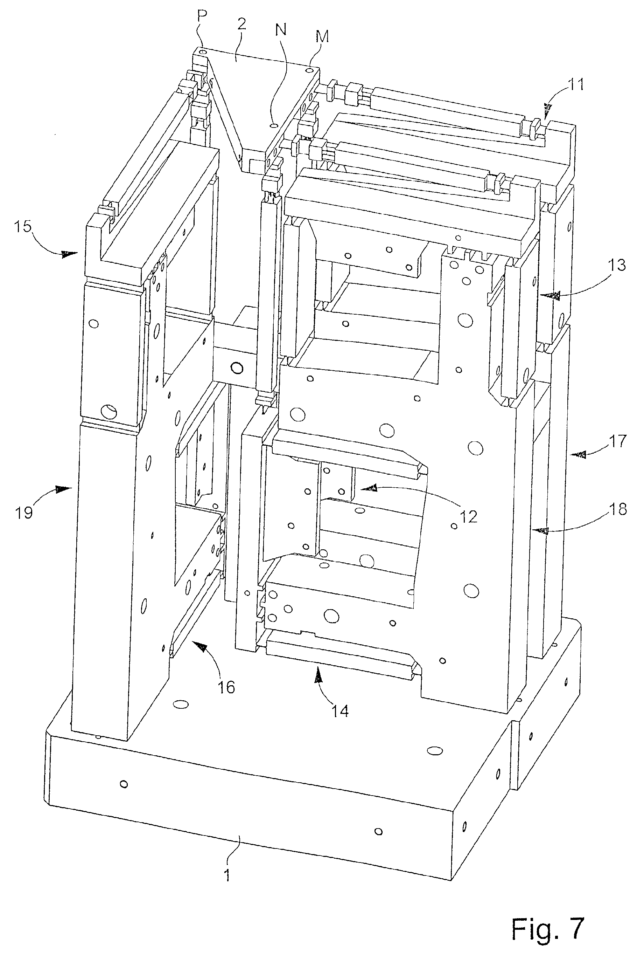

L'appareil représenté dans les figures 1 à 8 comporte une base fixe 1 et une plate-forme mobile 2 destinée à supporter un objet 3 (figure 2), par exemple l'extrémité d'une fibre optique qu'il s'agit de positionner avec une grande précision. La plate-forme 2 est reliée à la base 1 par six liaisons articulées disposées en parallèle, formées par six unités cinématiques articulées 11, 12, 13, 14, 15 et 16 ayant chacune une direction de translation parallèle à l'un des trois axes X, Y et Z d'un repère orthogonal cartésien. Plus précisément, les trois unités cinématiques 12, 14 et 16 ont une direction de translation parallèle à l'axe Y, qui est de préférence vertical dans le cas présent, les deux unités cinématiques 11 et 13 ont une direction de translation parallèle à l'axe X, tandis que la sixième unité cinématique 15 a une direction de translation parallèle à l'axe Z. On verra plus loin d'intérêt d'avoir trois de ces unités orientées suivant la direction verticale.

Dans cet exemple, les six unités cinématiques susmentionnées sont groupées deux à deux dans trois structures articulées planes 17, 18 et 19 qui peuvent avantageusement constituer des modules constructifs, car elles ont toutes la même configuration géométrique et une construction identique, au moins en ce qui concerne leurs éléments principaux. Dans le présent exemple, ces trois structures s'étendent dans des plans verticaux, de sorte qu'elles peuvent présenter une grande rigidité vis-à-vis des effets de la gravité. Les deux structures articulées 17 et 18 sont juxtaposées parallèlement et s'étendent dans des plans parallèles à celui défini par les axes X et Y. La troisième structure articulée 19 est perpendiculaire aux deux autres et s'étend dans un plan parallèle aux axes Y et Z.

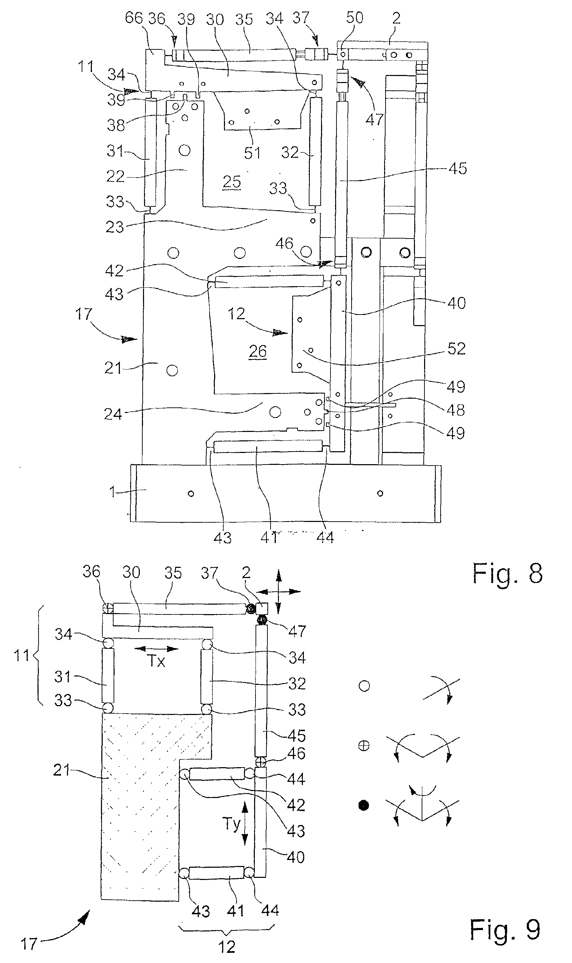

Les figures 8 et 9 montrent respectivement la forme et la configuration cinématique de la structure articulée plane 17, qui comprend les unités cinématiques 11 et 12. Cette structure est dite plane parce que les axes longitudinaux de ses éléments articulés se trouvent en principe dans un même plan, au moins dans une position de départ, mais on verra plus loin que certain d'entre eux peuvent subir de légères déviations latérales par rapport à ce plan en fonction des mouvements imposés à la plate-forme 2.

La structure articulée 17 comporte un bâti 21 fixé rigidement à la base 1 et formé de préférence par une plaque épaisse qui est découpée de façon à présenter plusieurs bras 22, 23 et 24 laissant des espaces libres 25 et 26 entre eux. L'unité cinématique 11 comporte un élément de translation 30 et deux bras identiques et parallèles 31 et 32 dont une extrémité est raccordée au bâti 21 par une articulation élastique 33 et l'autre extrémité est raccordée à l'élément de translation par une articulation élastique 34. Les quatre articulations 33 et 34 sont du type à un seul degré de liberté, qui est représenté par un cercle blanc dans la figure 9. L'axe de rotation de ces articulations est perpendiculaire au plan du dessin, donc au plan général de la structure 17. Ainsi, les éléments 30 à 32 forment avec le bâti 21 un parallélogramme déformable élastiquement qui permet à l'élément de translation 30 un mouvement de translation Tx parallèle à l'axe X. Bien entendu, l'élément 30 subit également des déplacements verticaux, mais ceux-ci sont du deuxième ordre et restent minimes tant que les bras 31 et 32 sont proches de la verticale.

L'élément de translation 30 est lié à la plate-forme 2 au moyen d'un bras de transmission articulé 35 qui est sensiblement horizontal et comporte une articulation 36 à proximité de sa liaison avec l'élément de translation 30 et une articulation 37 à proximité de sa liaison avec la plate-forme mobile 2. L'articulation 36 est à deux degrés de liberté, autrement dit du type à cardan, pour permettre au bras de transmission 35 de suivre les mouvements de la plate-forme 2 dans les directions Y et Z sans transmettre d'effort notable à l'élément de translation 30 dans ces deux directions. Ce type d'articulation est représenté par une croix dans un cercle dans la figure 9. L'articulation 37 est d'un type à trois degrés de liberté, autrement dit à rotule, représenté par un disque noir dans la figure 9, afin que les rotations de la plate-forme 2 suivant les trois axes X, Y et Z ne se transmettent pas au bras de transmission 35. Par contre, les deux articulations 36 et 37 sont rigides et dépourvues de jeu dans la direction axiale X du bras de transmission 35, de sorte que le bras 35 transmet rigoureusement toute translation Tx de l'élément 30 à la plate-forme mobile 2 et vice-versa.

Afin d'empêcher une amplitude excessive de la translation Tx, le bâti 21 comporte une butée saillante 38 qui s'étend dans un intervalle entre deux ergots 39 (ou deux épaulements analogues) de l'élément de translation 30, de façon à limiter la translation maximale de ce dernier dans les deux sens à partir de la position médiane représentée. La largeur de cet intervalle dépend principalement de la longueur des bras 31 et 32 et elle est choisie typiquement de façon à limiter l'inclinaison de ces bras à environ 5 degrés, ce qui permet tout de même une amplitude de translation de plusieurs millimètres. D'autre part, on notera que l'écartement relativement grand des bras 31 et 32 assurent une bonne rigidité du parallélogramme.

La seconde unité cinématique articulée 12 de la structure 17 est réalisée selon les mêmes principes et comporte un élément de translation 40 disposé verticalement qui forme, avec le bâti 21 et deux bras parallèles articulés 41 et 42 pourvus d'articulations 43 et 44, un parallélogramme déformable lui permettant d'effectuer un mouvement de translation Ty dans la direction de l'axe Y, c'est-à-dire en direction verticale. L'élément de translation 40 est relié à la plate-forme 2 par un bras de transmission 45 pourvu d'articulations 46 et 47 à proximité de ces extrémités. Les articulations 43, 44, 46 et 47 sont identiques aux articulations 33, 34, 36 et 37 décrites ci-dessus.

Comme dans l'unité cinématique 11, l'amplitude de la translation Ty de l'élément de translation 40 est limitée par une butée 48 solidaire du bâti 21 et située entre deux ergots 49 de l'élément 40.

De préférence, les deux bras de transmission 35 et 45 se terminent par un bloc commun 50 qui est fixé de manière démontable à la plate-forme 2.

On notera aussi que les éléments de translation 30 et 40 ont des plaques respectives 51 et 52 qui s'étendent dans les espaces libres 25 et 26 pour permettre de raccorder ces éléments à des actionneurs et des capteurs respectifs logés dans ces espaces, comme on le verra plus loin.

La structure articulée 17 décrite ci-dessus peut avantageusement être réalisée en une seule pièce à partir d'une plaque métallique, grâce à un usinage par électro-érosion. Afin d'augmenter les courses permises par les articulations tout en conservant un encombrement réduit, le métal préféré est le titane. L'utilisation de la technique d'électro-érosion permet une fabrication précise et rapide d'une telle pièce à un coût acceptable.

Dans la mesure où une telle structure articulée s'étendra dans un plan vertical dans l'appareil en position de service, la plaque servant à la réaliser n'a pas besoin d'avoir une forte épaisseur pour présenter une rigidité suffisante vis-à-vis des effets de la gravité, puisqu'il est facile de donner des dimensions suffisantes dans le plan de la plaque aux parties concernées de cette structure, en particulier à son bâti 21.

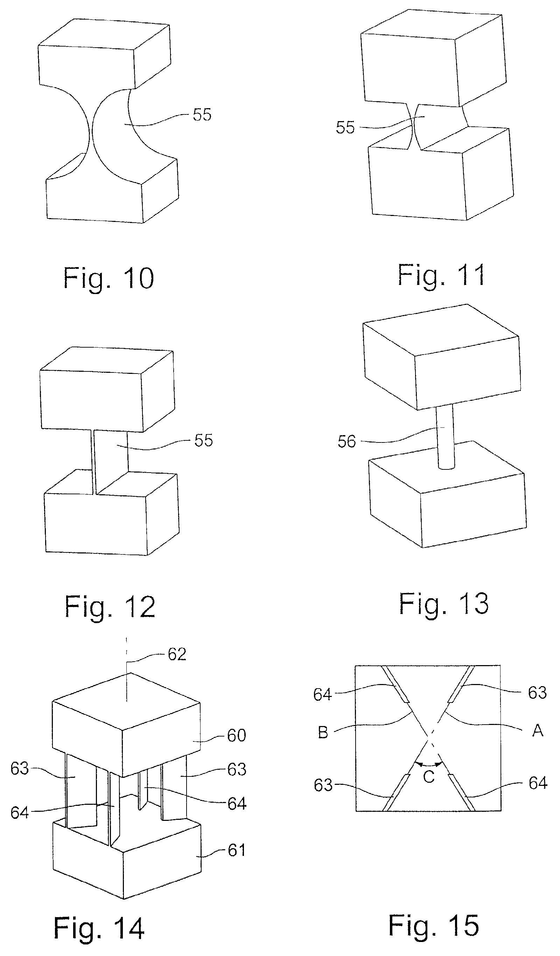

Les figures 10 à 12 représentent trois formes connues d'articulations élastiques à un seul degré de liberté, qui sont utilisables pour constituer les articulations 33, 34, 43 et 44 décrites plus haut. Ces trois formes de réalisation comportent une partie amincie formant une lame flexible 55 qui autorise une rotation relative des parties adjacentes par rapport à un axe transversal situé dans son plan, presque sans opposer de résistance, mais en autorisant seulement des rotations relativement faibles autour des deux autres axes perpendiculaires. En même temps, cette partie amincie est suffisamment rigide en compression pour transmettre sans risque de flambage les mouvements longitudinaux. Les techniques d'électro-érosion permettent de réaliser ces articulations avec une grande précision.

De manière connue, la succession de deux articulations de ce type, disposées de façon que leurs axes respectifs forment un angle de 90°, constitue une articulation du type à cardan et peut être utilisée pour former les articulations 36 et 46 décrites plus haut. Autrement, on peut utiliser une articulation du type représenté à la figure 13, comportant une partie amincie en forme de tige 56 qui est flexible latéralement dans n'importe quelle direction, mais suffisamment rigide en compression.

La figure 14 représente une forme de réalisation avantageuse d'une articulation de torsion, dont la figure 15 montre une coupe à mi-hauteur. Comme les précédentes, cette articulation est formée par amincissement d'un barreau métallique, afin de permettre un mouvement relatif des parties adjacentes 60 et 61 de ce barreau. En l'occurrence, il s'agit d'un mouvement de torsion pure, à savoir une rotation autour de l'axe longitudinal 62 du barreau, sans rotation autour des deux axes perpendiculaires à celui-ci et sans déplacement transversal entre les deux parties 60 et 61. La partie amincie est formée par deux paires de lames flexibles 63 et 64 parallèles à l'axe 62, les deux lames 63 étant situées dans un même plan A et les deux autres lames 64 étant situées dans un même plan B qui forme avec le plan A un angle C suffisamment grand pour que les lames 64 soient relativement éloignées du plan A, et les lames 63 relativement éloignées du plan B. Cette disposition empêche tout mouvement de flexion ou de cisaillement entre les parties 61 et 62 du barreau, grâce à la rigidité des lames 63 et 64 dans leur propre plan.

Par rapport aux articulations de torsion du type connu utilisant une partie amincie en forme de fil, l'articulation représentée aux figures 14 et 15 a l'avantage d'être beaucoup plus rigide en compression et d'empêcher tout déplacement transversal par cisaillement. De plus, comme elle est vide dans sa région centrale, on peut avantageusement la fabriquer par une technique d'électro-érosion à fil, qui est moins coûteuse que l'électro-érosion à enfonçage. L'angle C représenté dans la figure 15 a une valeur inférieure à 90° afin de faciliter le processus d'électro-érosion à fil avec les machines courantes.

Dans sa forme la plus générale, une articulation de torsion réalisée selon les principes utilisés dans l'articulation des figures 14 et 15 doit comporter au moins deux lames flexibles disposées dans des plans respectifs parallèles à l'axe de torsion désiré, à condition qu'au moins deux de ces plans des lames ne soient pas parallèles entre eux. Par exemple, dans une coupe perpendiculaire à l'axe de torsion, la disposition des lames peut avoir la forme d'un H, d'un U, d'un V, d'une étoile etc. Les lames peuvent être contiguës ou non, selon la rigidité désirée.

De préférence, les articulations 37 et 47 à trois degrés de liberté décrites plus haut sont constituées par l'adjonction d'une articulation de torsion selon la figure 14 à une paire d'articulations de flexion disposées perpendiculairement l'une à l'autre comme dans les articulations 36 et 46.

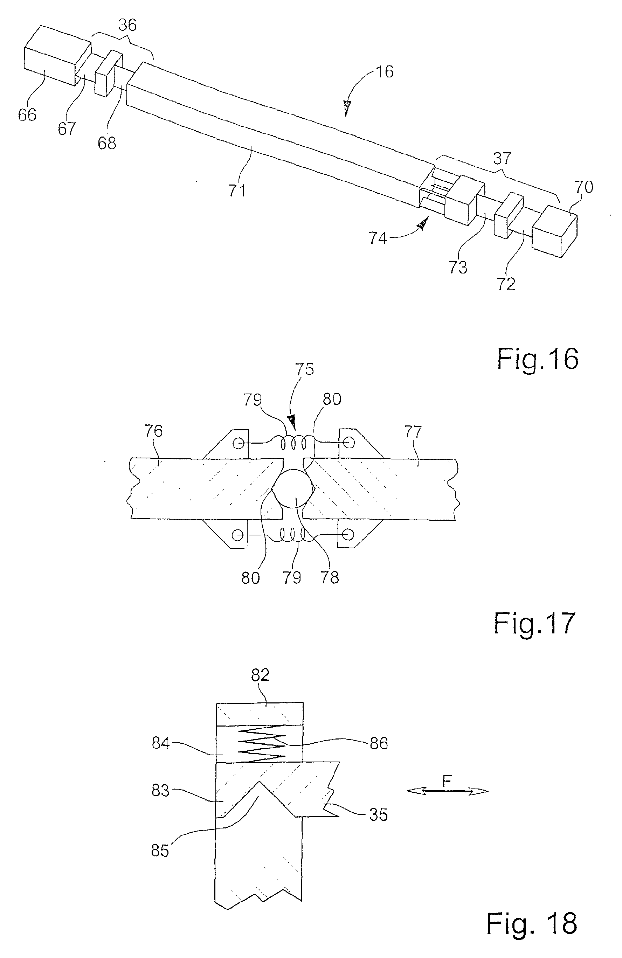

La figure 16 montre plus en détail le bras de transmission 35 représenté notamment aux figures 8 et 9 et montre en particulier comment les articulations à plusieurs degrés de liberté 36 et 37 de ce bras sont constituées chacune par une combinaison de plusieurs articulations à un seul degré de liberté. Le bras de transmission 35 est formé d'un barreau métallique, par exemple à section transversale carrée, pourvu de cinq articulations élastiques distinctes ayant chacune un seul degré de liberté. L'articulation à deux degrés de liberté 36 décrite plus haut, située à proximité d'une première extrémité 66 du barreau, se compose de deux articulations de flexion 67 et 68 qui sont de préférence sensiblement perpendiculaires l'une à l'autre, l'articulation 67 permettant une flexion du bras autour d'un axe horizontal et l'articulation 68 une flexion autour d'un axe vertical. Chacune de ces articulations peut être de l'un des types représentés aux figures 10 à 12.

L'articulation à trois degrés de liberté 37 se trouve à proximité de l'autre extrémité 70 du barreau et elle est séparée de l'articulation 36 par la partie centrale 71 relativement longue du barreau. Elle se compose de deux articulations de flexion 72 et 73, de préférence sensiblement perpendiculaires et semblables aux articulations 67 et 68, et d'une articulation de torsion 74 qui est de préférence du type représenté aux figures 14 et 15. On notera toutefois que l'articulation de torsion 74 n'a pas besoin d'être proche des articulations de flexion 67, 68, 72 et 73, c'est-à-dire qu'elle pourrait occuper n'importe quelle position le long du bras 35. D'autre part, il faut noter que dans des appareils selon la présente invention, certains bras de transmission ou de liaison n'ont pas besoin de présenter un degré de liberté en torsion et peuvent donc se passer d'une articulation de torsion.

Bien que l'utilisation d'articulations élastiques soient préférée dans le cadre de l'invention, il est possible d'utiliser d'autres types d'articulations sans jeu. Par exemple, la figure 17 représente schématiquement en coupe longitudinale une articulation 75 à bille, donc à trois degrés de liberté, pouvant former par exemple les articulations 37 et 47 dans le schéma de la figure 9. L'articulation 75 relie deux barreaux 76 et 77 et doit transmettre un effort axial de compression de l'un à l'autre. Une bille 78 est comprimée axialement entre les deux extrémités mutuellement opposées des barreaux, grâce à des moyens élastiques tels que des ressorts 79 reliant ceux-ci. Pour rester centré, la bille 78 s'appuie dans une cavité centrale 80, par exemple conique, ménagée dans l'extrémité de chaque barreau.

Si la plate-forme mobile 2 ou un objet qui lui est lié subit un choc ou un effort trop important, les efforts de compression qui sont transmis à travers les articulations élastiques peuvent endommager ces articulations. Pour prévenir ce risque, il est possible de prévoir une sorte de fusible mécanique associé à chaque bras de transmission reliant la plate-forme aux éléments de translation, puisque ces derniers sont équipés d'organes de butée.

La figure 18 montre un mode de réalisation possible d'un tel fusible mécanique au niveau de la connexion entre la tête 82 de l'élément de translation 30 et l'extrémité correspondante 83 du bras de transmission articulé 35. Un orifice rectangulaire 84 traverse la tête 82 dans la direction longitudinale du bras 35. La paroi inférieure de cet orifice présente une partie saillante 85 en forme de dièdre qui s'engage dans une entaille de forme correspondante, ménagée dans le bras 35. Celui-ci est maintenu en appui élastique sur la saillie 85 par la précontrainte verticale d'un ressort 86 monté dans l'orifice 84. Ainsi, le mouvement de translation Tx de l'élément 30 se transmet au bras de transmission 35 ou réciproquement sans aucun jeu, tant que la force F transmise entre ces éléments ne dépasse pas une force limite qui produirait un glissement relatif entre ces deux pièces sur la face inclinée correspondante de la partie saillante 85, en surmontant la précontrainte assurée par le ressort 86.

Comme on le voit en particulier dans la figure 1, l'unité cinématique articulée 11 est associée à un capteur optique de déplacement linaire 90 servant à mesurer les mouvements de translation de l'élément de translation 30 dans la direction X. Ce capteur comprend une règle optique 91 (figure 2) fixée à l'élément 30, et un boîtier 92 monté sur le bâti 21 de la structure articulée 17. Le capteur optique 90 peut avantageusement être du type LIP 481 R 2µm ± 0,2 µm G0 avec interpolateur IBV 660 B de la maison Heidenhain à Schwerzenbach, Suisse, qui constitue un système de mesure linéaire incrémentiel de très haute précision ayant une course de mesure de 10 mm.

Toutes les autres unités cinématiques articulées 12 à 16 de l'appareil sont équipées de capteurs optiques semblables, portant les références 93 à 97 dans les figures 1 à 5. Les signaux de sortie de ces capteurs sont transmis à une unité centrale de mesure et de commande de l'appareil, qui n'est pas représentée.

L'unité cinématique articulée 11 est associée à un moteur électrique linéaire 100 qui est commandé par l'unité centrale susmentionnée afin d'imposer des positions et déplacements voulus à l'élément de translation 30 et à la plate-forme 2, dans une direction parallèle à l'axe X. Ce moteur comporte un stator bobiné 101 porté par un support 102 fixé au bâti 21, tandis que la partie mobile du moteur est formée par un aimant fixé à la plaque 51 solidaire de l'élément de translation 30. Le moteur 100 est de préférence du type MMA 3008-025-10A fabriqué par ETEL à Môtiers, Suisse.

Toutes les autres unités cinématiques articulées 12 à 16 sont équipées de moteurs linéaires semblables au moteur 100, qui portent les références 104 à 108 dans les figures 1 à 5.

Chacun des moteurs linéaires 100 et 104 à 108 est commandé par une boucle de réglage comprenant le capteur optique correspondant pour imposer et maintenir une position d'un point de connexion correspond M, N ou P de la plate-forme 2 avec une très haute précision, qui est de l'ordre de 1 µm à 0,01 µm, voire jusqu'à 5 nm selon la résolution du capteur utilisé. Une telle précision est possible notamment par le fait que les moteurs linaires et les capteurs de déplacement utilisés sont de types sans contact et que les articulations des unités cinématiques sont sans jeu et sans frottement. La rigidité des structures articulées 17, 18 et 19 joue également un rôle dans ce résultat. A ce sujet, on notera que les trois bâtis de ces structures articulées sont solidarisés par des éléments intercalaires tels que 110 et 111 pour former, avec la base 1, un bâti très rigide de l'appareil.

Dans les figures 1 et 2, on remarque que les deux unités cinématiques 11 et 12 de la structure articulée 17 sont raccordées au même point de connexion M de la plate-forme 2, ce qui simplifie la commande. De manière similaire, les deux unités cinématiques de la structure articulée 18 sont raccordées à un même point de connexion M, et celles de la structure articulée 19 à un même point de connexion P. Les trois points M, N et P forment les sommets d'un triangle rectangle, de sorte que le point P se trouve sur l'intersection des plans verticaux respectifs des deux structures articulées 17 et 19. Comme celles-ci sont disposées le long de deux faces latérales de l'appareil, le point P se trouve à proximité d'un angle supérieur de l'appareil. Cet emplacement est idéal pour l'objet 3 que l'appareil doit manipuler, puisqu'on peut facilement amener près de cet emplacement un autre objet ou appareil par rapport auquel l'objet 3 doit être positionné ou manipulé.

On remarque aussi que les trois axes de translation des unités cinématiques 11, 15 et 16, qui sont parallèles respectivement aux axes X, Z et Y, se coupent dans la région du point de connexion P. Il en résulte qu'une translation imposée par l'une de ces unités produit une translation pratiquement égale du point P, c'est-à-dire qu'il y a un bon découplage entre les trois directions de translation à cet endroit.

Lorsque des translations égales, c'est-à-dire de même amplitude et de même sens, sont produites par les deux unités cinématiques parallèles 11 et 13 sur les points M et N, la plate-forme 2 effectue une translation pure Tx principalement dans la direction de l'axe X. Par contre, si lesdites amplitudes ne sont pas égales, la plate-forme 2 subit en outre une rotation Ry par rapport à l'axe Y. Cette rotation s'effectue autour du point P dont la position horizontale dans la direction Z est maintenue par l'unité cinématique 15. Pendant ce temps, les niveaux des trois points M, N, P sont maintenus par les trois unités cinématiques verticales 12, 14 et 16.

En actionnant uniquement l'unité cinématique 15, on produit une translation Tz du point P principalement dans la direction Z. La plate-forme 2 se déplace alors pratiquement sans pivoter, par le fait qu'elle forme un parallélogramme articulé sur le bâti avec les bras de transmission des unités cinématiques 11 et 13.

De manière analogue, les mouvements combinés des trois unités cinématiques verticales 12, 14 et 16 permettent d'imposer à la plate-forme 2 des translations verticales Ty parallèles à l'axe Y, si leurs amplitudes de translation sont égales, et des rotations Rx et Rz par rapport aux axes X et Z si lesdites amplitudes sont inégales.

Le fait d'avoir trois unités cinématiques à axe vertical pour supporter la plate-forme 2 présente l'avantage de répartir sur ces trois unités (au lieu de deux dans le cas de la demande de brevet EP 0 937 961) le poids de la plate-forme et des éléments qu'elle supporte. En définitive, ce poids se transmet au bâti à travers les moteurs électriques linéaires 104, 106 et 108, qui peuvent ainsi être moins puissants que s'ils étaient seulement au nombre de deux.

Comme on le voit dans la figure 1, des butées saillantes 114 et 115 sont disposées sur les éléments de translation respectifs 30 et 116 des unités cinématiques parallèles 11 et 13, afin de coopérer entre eux pour former un dispositif de butée capable de limiter une translation différentielle entre ces deux éléments de translation, afin de limiter la rotation Ry de la plate-forme. Des butées similaires 117 et 118 sont prévues sur les unités cinématiques 12 et 16 afin de limiter les rotations Rz, et sur les unités cinématiques 17 et 18 afin de limiter les rotations Rx. Dans le présent exemple, la valeur maximale des rotations permises est de l'ordre de ±5 degrés par rapport à la position médiane.

On notera que l'appareil décrit ci-dessus est capable d'imposer à la plate-forme 2 et à l'objet 3 fixé à celle-ci des efforts suivants six degrés de liberté, à savoir des forces linéaires suivant les axes X, Y et Z et des couples correspondants aux rotations Rx, Ry et Rz. A cet effet, on commande les moteurs linaires 100 et 104 à 108 avec des courants prédéterminés, qui ne sont pas asservis aux signaux de sortie des capteurs optiques 90 et 93 à 97.

La description qui précède montre que les principes de la présente invention permettent de réaliser un manipulateur de haute précision à six degrés de liberté, avec une construction modulaire, très compacte et très rigide qui a en outre l'avantage de supporter l'objet manipulé tout près d'un angle extérieur de l'appareil. Bien que les trois directions de translation X, Y et Z soient de préférence perpendiculaires entre elles, les mêmes principes de construction sont utilisables avec des directions de translation non perpendiculaires.

Un homme du métier comprendra que l'appareil décrit ci-dessus peut être utilisé pour mesurer la position de l'objet 3 qu'il supporte, au moyen des capteurs optiques 90 et 93 à 97, si les moteurs électriques 100 et 104 à 108 sont désactivés ou enlevés. Dans ce cas, la plate-forme 2 n'est pas soutenue par l'appareil lui-même, mais par le dispositif extérieur qui impose une position à l'objet 3.

En remplaçant les moteurs linaires 100 et 104 à 108 par des capteurs de force, notamment des capteurs sans contact formés par des transducteurs électromagnétiques, ou en utilisant les moteurs linaires comme de tels transducteurs, on peut transformer le manipulateur décrit ci-dessus en un capteur de force à six degrés de liberté, permettant de mesurer des efforts appliqués à la plate-forme 2 sous la forme de forces parallèles aux axes X, Y et Z et de couples de rotation par rapport à ces axes.

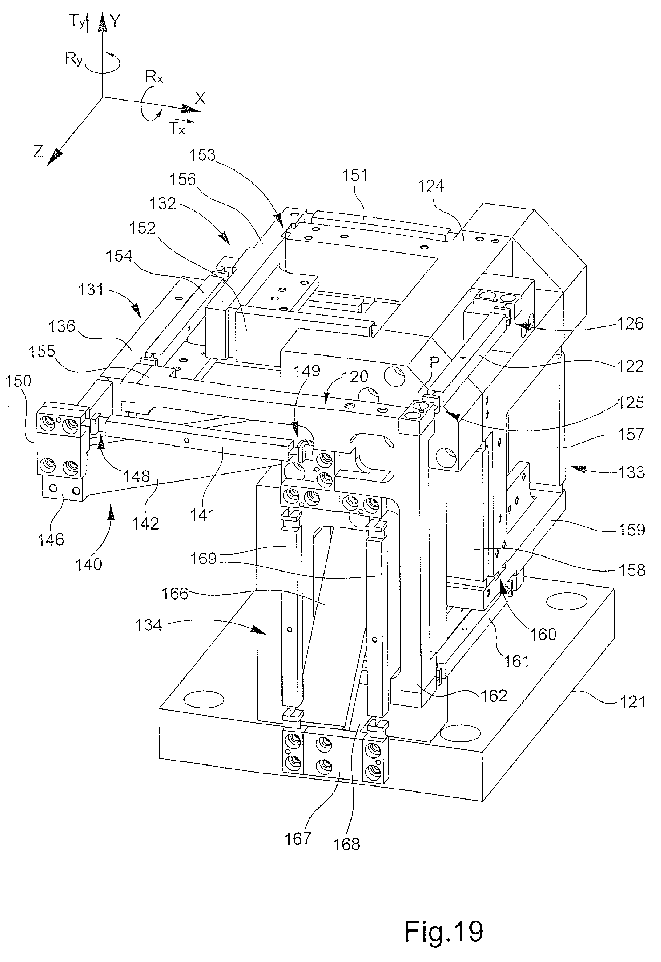

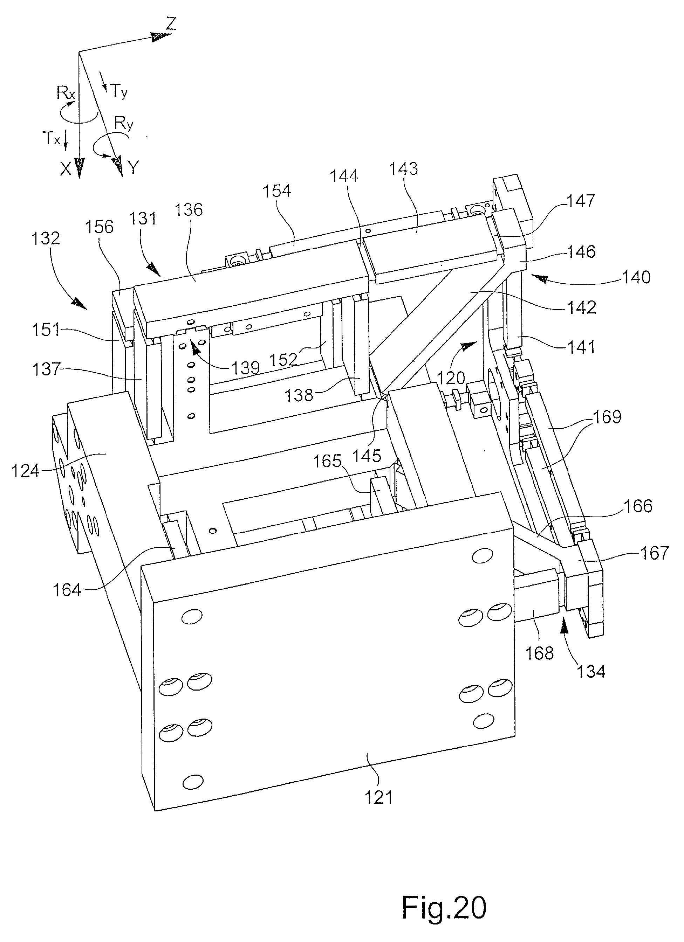

En référence aux figures 19 et 20, on décrira plus sommairement un deuxième mode de réalisation de l'invention, sous la forme d'un manipulateur à quatre degrés de liberté, à savoir des translations Tx et Ty parallèles aux axes X et Y, et des rotations Rx et Ry par rapport à ces mêmes axes. Comme beaucoup d'éléments de cet appareil sont analogues à ceux de l'exemple précédent, on décrira avant tout les éléments qui diffèrent de celui-ci.

La plate-forme 120 de l'appareil a une forme sensiblement en équerre et elle supporte l'objet à manipuler au voisinage d'un point P proche de l'angle de l'équerre. La plate-forme 120 est reliée à la base 121 de l'appareil par six liaisons articulées disposées en parallèle, comprenant un bras de liaison articulé 122 parallèle à l'axe Z et quatre unités cinématiques articulées, dont l'une forme deux liaisons entre la plate-forme et la base. Ces unités cinématiques articulées 131 à 134 sont associées à des capteurs optiques de déplacement et à des moteurs électriques linaires comme dans l'exemple précédent, mais ces capteurs et moteurs ne sont pas représentés dans les dessins pour des raisons de clarté.

Une extrémité du bras 122 est fixée à la plate-forme 120 au voisinage du point P. Son autre extrémité est fixée à un bâti 124 monté sur la base 121. Deux articulations élastiques 125 et 126 à deux degrés de liberté sont prévues au voisinage des extrémités du bras 122. Ainsi, ce bras empêche toute translation du point P dans la direction de l'axe Z, mais autorise les translations et rotations par rapport aux axes X et Y. Il n'a pas besoin d'une articulation de torsion, car la plate-forme 120 ne peut pas tourner autour de l'axe Z.

L'unité cinématique 131 comporte un élément de translation 136 et deux bras identiques et parallèles 137 et 138, dont les extrémités sont raccordées au bâti 124 et à l'élément 136 par des articulations élastiques de flexion pour former un parallélogramme déformable comme dans l'exemple précédent. L'élément 136 est mobile en translation dans une direction parallèle à l'axe Z, la translation étant limitée par un système de butée 139. La plate-forme 120 est reliée à l'élément de translation 136 par un dispositif de transmission articulé 140 comprenant un bras de transmission articulé 141, un bras de renvoi 142 et un bras intermédiaire 143 qui s'étend dans le prolongement de l'élément de translation 136, auquel il est relié par une articulation élastique 144 à un seul degré de liberté. Le bras 141 est sensiblement parallèle à l'axe X, tandis que le bras 143 est sensiblement parallèle à l'axe Z, de sorte qu'ils forment entre eux un angle qui oscille autour de 90° au cours des mouvements du mécanisme. Le bras de renvoi 142 se situe sensiblement sur une bissectrice de cet angle. Son extrémité arrière est raccordée au bâti 124 par une articulation élastique de flexion 145. A son autre extrémité, il comporte une tête 146 qui est raccordée au bras 143 par une articulation élastique 147 analogue à l'articulation 144. Le bras de transmission 141 comporte près de ses extrémités deux articulations de flexion 148 et 149 à deux degrés de liberté. L'une de ses extrémités est fixée directement à la plate-forme 120, tandis que l'autre est fixée à la tête 146 du bras de renvoi 142 à l'aide d'une pièce intermédiaire 150 qui permet de décaler le bras 141 par rapport au plan général de l'unité cinématique 131. Un tel décalage, et plus généralement l'utilisation du dispositif de renvoi 140, peut être utile pour offrir plus de choix dans l'implantation des unités cinématiques, en particulier en vue de placer leurs moteurs électriques dans des régions où l'évacuation de la chaleur est facilitée. Cela permet aussi de fixer les moteurs de plusieurs unités cinématiques sur un circuit imprimé commun.

L'unité cinématique articulée 132 s'étend à côté de l'unité 131, mais elle n'a pas de dispositif de renvoi. Elle comporte un parallélogramme articulé similaire à celui de l'unité 131 et comprenant un élément de translation 156 et deux bras parallèles 151 et 152. L'élément 156 est pourvu d'un dispositif de butée 153 qui limite son amplitude de translation. Son bras de transmission 154, dont la construction est semblable à celle du bras 141, s'étend dans la même direction Z que l'élément 156, mais il est décalé latéralement. Ce bras est fixé à une extrémité 155 de la plate-forme 120, de sorte que l'unité 132 impose à cette extrémité des translations dans la direction de l'axe Z. Comme le point P ne peut pas se déplacer dans cette direction, un tel mouvement se traduit par une rotation Ry de la plate-forme par rapport à l'axe Y.

L'unité cinématique articulée 133 a une configuration analogue à celle de l'unité 132, avec deux bras parallèles 157 et 158, un élément de translation 159 pourvu d'un dispositif de butée 160, et un bras de transmission articulé 161 qui est raccordé à une extrémité inférieure 162 de la plate-forme 120. Cette unité a un effet analogue à celui de l'unité 132, sauf qu'elle produit une rotation Rx de la plate-forme 120 autour de l'axe X.

L'unité cinématique 134 est similaire à l'unité 131 en ce sens qu'elle comporte un dispositif de renvoi analogue au dispositif 140 décrit plus haut et permettant d'imposer à la plate-forme 120 une translation verticale suivant l'axe Y à partir d'une translation horizontale suivant l'axe Z dans le parallélogramme articulé. Ce dernier comporte deux bras parallèles 164 et 165 et un élément de translation qui n'est pas visible et s'étend au-dessus de la base 121. Cet élément est relié à la tête 167 du bras de renvoi 166 par un bras intermédiaire articulé 168 similaire au bras 143. La plate-forme 120 est reliée à la tête 167 du bras de renvoi au moyen de deux bras de transmission articulés 169 qui sont parallèles et espacés l'un de l'autre et sont construits comme le bras 141. Ainsi, les éléments 167, 169 et 120 forment ensemble un parallélogramme déformable dont l'effet est d'empêcher une rotation de la plate-forme 120 autour de l'axe Z. En effet, les articulations du parallélogramme et du bras de renvoi de l'unité cinématique 134 sont relativement larges et ne permettent donc pas de torsion, ce qui empêche toute rotation de la tête 167 du bras de renvoi par rapport à l'axe Z.

En résumé, l'appareil illustré par les figures 19 et 20 permet d'imposer au point P de la plate-forme 120 les mouvements suivants :
- translation Tx principalement suivant l'axe X au moyen de l'unité cinématique 131;
- translation Ty principalement suivant l'axe Y au moyen de l'unité cinématique 134;
- rotation Rx au moyen de l'unité cinématique 133;
- rotation Ry au moyen de l'unité cinématique 132.

Grâce aux deux dispositifs de renvoi, la direction de translation est la même dans les quatre parallélogrammes déformables, c'est-à-dire la direction de l'axe Z. Ainsi, les moteurs sont groupés deux à deux, de même que les capteurs optiques, ce qui facilite les raccordements électriques et le refroidissement. En outre, cette disposition est avantageuse notamment si l'on veut changer le type d'actionneur, par exemple remplacer les moteurs linéaires par des vis à billes et des moteurs électriques tournants, car l'encombrement de l'appareil n'est alors augmenté que dans une seule direction.

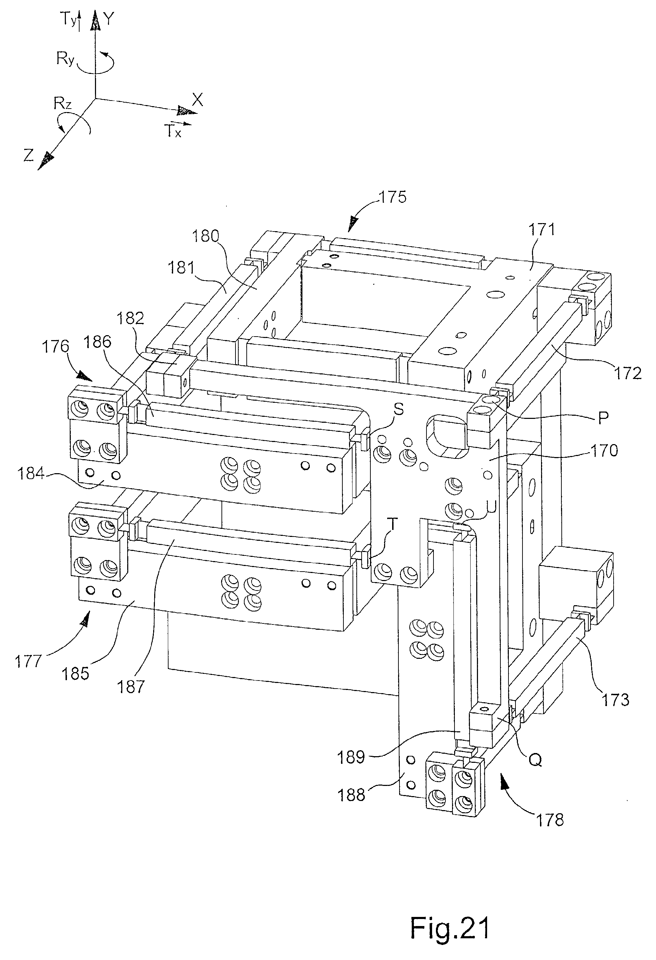

La figure 21 représente un troisième mode de réalisation de l'invention, sous la forme d'un manipulateur à quatre degrés de liberté qui, contrairement à celui des figures 19 et 20, ne comporte pas de dispositif de renvoi. La plate-forme mobile 170 de cet appareil a une forme en équerre et elle est reliée au bâti 171 de l'appareil au moyen de deux bras de liaison articulés 172 et 173 à quatre degrés de liberté, comme le bras de liaison 122 représenté à la figure 19. Ces deux bras sont parallèles à l'axe Z et sont rattachés à la plate-forme en deux points de connexion P et Q situés sur une même verticale, de sorte que ces points ne peuvent pas subir de translation principale dans la direction de l'axe Z. L'objet à manipuler sera placé au voisinage du point P.

Par ailleurs, la plate-forme 170 est reliée au bâti 171 par quatre unités cinématiques articulées 175, 176, 177 et 178. La structure de ces unités est comparable à celle des unités sans dispositif de renvoi de l'exemple précédent, à savoir les unités 132 et 133, de sorte qu'on n'en décrira pas tous les éléments. Comme dans l'exemple précédent, on a supprimé les capteurs optiques et les moteurs linaires afin de clarifier le dessin.

L'élément de translation 180 de l'unité cinématique 175 est relié par un bras de transmission articulé 181 à une extrémité 182 de la plate-forme 170 en forme d'équerre. Il effectue une translation Tz qui impose une rotation Ry à la plate-forme, en particulier au point P.

Les éléments de translation 184 et 185 des unités cinématiques 176 et 177 sont parallèles et effectuent des translations Tx parallèles à l'axe X. Ces translations sont transmises à la plate-forme par les bras de transmission articulés respectivement parallèles 186 et 187 des deux unités cinématiques, ces bras étant raccordés à des points de connexion S et T espacés verticalement l'un de l'autre sur la plate-forme. Ainsi, quand les deux unités cinématiques 176 et 177 effectuent des translations égales, elles imposent à la plate-forme 170 une translation Tx parallèle à l'axe X, tandis que lorsque leurs amplitudes de translation sont inégales, elles imposent aussi à la plate-forme une rotation Rz.

Quant à l'unité cinématique 178, son élément de translation 188 effectue une translation verticale Ty et transmet ce mouvement à la plate-forme au moyen du bras de transmission articulé 189 rattaché au point de connexion U de la plate-forme. Pendant ce temps, les bras 186 et 187 des unités 176 et 177 fonctionnent comme un parallélogramme articulé qui empêche une rotation Rz de la plate-forme.

Le dessin montre bien que la construction de l'appareil est extrêmement compacte, notamment par le fait que les trois unités cinématiques 175, 176 et 177 s'étendent dans des plans parallèles et sont empilées à côté de la partie principale du bâti 171.

Les applications des appareils réalisés selon la présente invention s'étendent à des domaines très divers, comprenant notamment :
- alignement optique et optoélectronique avec possibilité d'alignement actif;
- assemblage de haute précision;
- manipulation de biocomposants, par exemple en génomique et en fécondation in vitro;
- interfaces homme-machine avec ou sans retour de force;
- téléopération, télémanipulation;
- usinage, par exemple par enlèvement de copeaux, laser, électro-érosion, gravage;
- scannage de surfaces;
- compensation active de vibrations;
- tables vibrantes;
- mesure de forces;
- mesure de position, par exemple par palpeur;
- domaine médical, par exemple chirurgie, microchirurgie, téléchirurgie.

## Revendications

1. Appareil pour imposer ou mesurer une position ou une force avec au moins quatre degrés de liberté, comportant une base fixe (1, 121), une plate-forme mobile (2, 120, 170), des liaisons articulées reliant en parallèle la plate-forme mobile à la base, et des moyens de mesure, lesdites liaisons articulées comprenant au moins quatre unités cinématiques articulées (11-16, 131-134, 175-178) dont chacune est montée sur la base et raccordée à un point de connexion de la plate-forme pour accompagner un mouvement de ce point dans une direction de translation correspondant à l'un des axes principaux (X, Y, Z) d'un repère de l'espace, au moins une paire desdites unités cinématiques étant raccordée à deux desdits points de connexion distants l'un de l'autre et agencée pour les accompagner en translation dans la même direction et accompagner ainsi une rotation de la plate-forme lorsque les amplitudes de translation de ces deux points sont inégales,
**caractérisé en ce que** chacune des unités cinématiques articulées (11-16, 131-134, 175-178) comporte un parallélogramme déformable élastiquement dans son propre plan, un dispositif de transmission articulé (35, 140, 181) reliant le parallélogramme à la plate-forme, et un capteur de déplacement linéaire (90, 93-97) fournissant un signal de sortie aux moyens de mesure, le parallélogramme comprenant un élément de support (21) lié à la base, un élément de translation (30) lié au dispositif de transmission et deux bras parallèles (31, 32) liés à l'élément de translation et à l'élément de support par des articulations sans jeu.

2. Appareil selon la revendication 1, **caractérisé en ce que** chaque dispositif de transmission comporte un bras de transmission (35, 141) à au moins quatre articulations élastiques, comprenant une paire d'articulations de flexion (67, 68; 72, 73) mutuellement perpendiculaires à proximité de chaque extrémité du bras de transmission et éventuellement une articulation de torsion (74).

3. Appareil selon la revendication 2, **caractérisé en ce que** dans au moins l'une des unités cinématiques articulées, le bras de transmission (35) est fixé directement à l'élément de translation du parallélogramme associé ou est fait d'une pièce avec cet élément.

4. Appareil selon la revendication 2, **caractérisé en ce que** dans au moins l'une des unités cinématiques articulées, le bras de transmission (141) forme un angle avec l'élément de translation du parallélogramme associé et le dispositif de transmission comporte en outre un dispositif de renvoi (140) reliant le bras de transmission à l'élément de translation et ayant un bras de renvoi articulé (142) situé sensiblement sur une bissectrice dudit angle.

5. Appareil selon l'une des revendications 2 à 4, **caractérisé en ce que** le parallélogramme et le dispositif de transmission d'une unité cinématique articulée sont faits d'une seule pièce.

6. Appareil selon la revendication 1, **caractérisé en ce que** dans ladite paire d'unités cinématiques articulées, les éléments de translation mutuellement parallèles desdites unités comportent des dispositifs de butée respectifs (114, 115; 117, 118) coopérant entre eux pour limiter une translation différentielle entre ces éléments de translation afin de limiter la rotation correspondante de la plate-forme.

7. Appareil selon la revendication 1, **caractérisé en ce qu'**il comporte au moins une structure articulée plane (17-19) comprenant une plaque rigide fixée à la base et deux des unités cinématiques articulées, dont les axes de translation sont sensiblement perpendiculaires entre eux, ladite plaque formant l'élément de support de chacune des deux unités cinématiques.

8. Appareil selon la revendication 7, **caractérisé en ce qu'**il comporte au moins deux desdites structures articulées planes (17, 18), agencées de façon similaire et disposées dans des plans parallèles de sorte que leurs axes de translation sont parallèles deux à deux.

9. Appareil selon la revendication 7, **caractérisé en ce qu'**il comporte au moins deux desdites structures articulées planes (17, 19), disposées dans des plans perpendiculaires de sorte que deux de leurs axes de translation sont parallèles et les deux autres sont mutuellement perpendiculaires, les deux structures articulées étant disposées le long de deux faces latérales de l'appareil, de sorte que leurs axes de translation perpendiculaires se coupent à proximité d'un angle de l'appareil.

10. Appareil selon la revendication 7, **caractérisé en ce qu'**il comporte trois desdites structures articulées planes, dont deux (17, 18) sont disposées dans des plans parallèles et dont la troisième (19) est disposée dans un plan perpendiculaire à ceux-ci, de sorte que ces trois structures ont un axe de translation parallèle à un même axe principal (Y), notamment vertical.

11. Appareil selon la revendication 1 à six degrés de liberté, **caractérisé en ce qu'**il comporte six desdites unités cinématiques articulées (11-16) et **en ce que** la direction de translation de trois des unités cinématiques articulées est parallèle à un premier (Y) des axes principaux, celle de deux autres des unités cinématiques articulées est parallèle à un deuxième (X) des axes principaux et celle de la sixième unité cinématique articulée est parallèle au troisième (Z) des axes principaux.

12. Appareil selon la revendication 11, **caractérisé en ce que** le premier axe principal (Y) est vertical.

13. Appareil selon la revendication 11 ou 12, **caractérisé en ce qu'**il comporte trois structures articulées planes comprenant chacune une plaque rigide fixée à la base et deux desdites unités cinématiques articulées, dont les axes de translation sont sensiblement perpendiculaires entre eux, ladite plaque formant l'élément de support de chacune des deux unités cinématiques, les plans respectifs desdites structures articulées étant tous parallèles au premier axe principal (Y).

14. Appareil selon l'une des revendications précédentes, **caractérisé en ce que** l'élément de translation de chacune des unités cinématiques articulées est associé à un transducteur électromagnétique linéaire (100, 104-108) relié à des moyens électriques de commande et/ou de mesure, ledit transducteur assurant une transmission de force sans contact entre l'élément de translation et l'élément de support de l'unité cinématique articulée.

15. Appareil selon la revendication 14, **caractérisé en ce que** le transducteur électromagnétique est situé à l'intérieur du parallélogramme articulé auquel il est associé.

16. Bras de transmission articulé (35), notamment pour un appareil selon l'une des revendications précédentes, le bras étant formé d'un barreau pourvu d'articulations élastiques formées par réduction de la section transversale du barreau, **caractérisé en ce qu'**il comporte cinq articulations élastiques distinctes, comprenant une paire d'articulations de flexion (67, 68; 72, 73) sensiblement perpendiculaires l'une à l'autre à proximité de chaque extrémité du barreau et une articulation de torsion (74).

17. Bras de transmission selon la revendication 16, **caractérisée en ce que** l'articulation de torsion comporte au moins deux lames flexibles (63, 64) disposées dans des plans respectifs (A, B) parallèles à un axe de torsion désiré, au moins deux de ces plans n'étant pas parallèles entre eux.

18. Bras de transmission selon la revendication 17, **caractérisé en ce que** l'articulation de torsion comporte deux paires de lames flexibles (63, 64) situées à distance d'un axe longitudinal (62) du barreau, chaque paire de lames étant disposée dans un plan respectif (A, B) qui contient ledit axe.

19. Bras de transmission selon la revendication 18, **caractérisé en ce que** lesdits plans (A, B) se coupent sous un angle inférieur à 90 degrés.
